# EUROPÄISCHE PATENTSCHRIFT

(11) **EP 2 174 473 B1**
(45) Veröffentlichungstag und Bekanntmachung des Hinweises auf die Patenterteilung: **07.09.2016**
(21) Anmeldenummer: 08759366.1
(22) Anmeldetag: 01.07.2008
(51) Int. Cl.: H04W 4/00, H04L 29/08, H04L 29/06, H04W 80/12

(54) **AUSFÜHREN VON APPLIKATIONEN AUF EINER MOBILFUNKKARTE**
EXECUTION OF APPLICATIONS ON A MOBILE PHONE CARD
EXÉCUTION D'APPLICATIONS SUR UNE CARTE DE TÉLÉPHONIE MOBILE

(30) Priorität: 02.07.2007 DE 102007030621
(43) Veröffentlichungstag der Anmeldung: 14.04.2010
(73) Patentinhaber: Giesecke & Devrient GmbH, 81677 München (DE)
(72) Erfinder: HARTEL, Karl, Eglof, 80689 München (DE)
(86) Internationale Anmeldenummer: PCT/EP2008/005371
(87) Internationale Veröffentlichungsnummer: WO 2009/003682

(56) Entgegenhaltungen:
- WO-A-01/96990
- WO-A-2006/030275
- DE-A1-102005 024 122
- US-A1- 2005 259 673

## Beschreibung

Die vorliegende Erfindung betrifft ein Verfahren zum Ausführen einer Card-Application-Toolkit-Kommandos umfassenden Applikation auf einer Mobilfunkkarte sowie eine derartige Mobilfunkkarte.

Das "Card Application Toolkit" (CAT) bildet eine von Mobilfunkendgeräten unterstützte generische Grundlage für die so genannten Application Toolkits von Chipkarten, die als Mobilfunkkarten eingesetzt werden. Hierunter fällt insbesondere das im Zusammenhang mit (U)SIM-Mobilfunkkarten bekannte "SIM Application Toolkits" (SAT). Derartige Toolkits stellen Funktionen in Mobilfunknetzen bereit, z.B. in einem (U)SIM-Mobilfunknetz, mit denen eine in ein Mobilfunkendgerät eingesetzte Mobilfunkkarte direkt auf das Mobilfunkendgerät sowie das Mobilfunknetz zugreifen kann, z. B. zum Aufspielen oder Herunterladen von Daten auf das Mobilfunkendgerät oder Anzeigen von Daten auf dessen Display. Diese Toolkits repräsentieren mächtige Werkzeuge, die Grundlage für eine Vielzahl von kommerziellen Anwendungen einer Mobilfunkkarte bilden, wie zum Beispiel in US 2005/0259673 A1 offenbart.

Im Zuge einer schrittweisen Umstellung der Datenkommunikation zwischen Mobilfunkkarten und Mobilfunkendgeräten auf das Hochgeschwindigkeitsprotokoll (HSP; "High Speed Protocol") könnte es passieren, dass Card-Application-Toolkit-Kommandos (CAT-Kommandos) oder SIM-Application-Toolkit-Kommandos (SAT-Kommandos) von Mobilfunkendgeräten, die eine Datenkommunikation über das Hochgeschwindigkeitsprotokoll ermöglichen, nicht mehr oder nur noch eingeschränkt unterstützt werden.

Derzeit wird der Zugang einer Mobilfunkkarte zu einem mobilen Paketnetz (z. B. GPRS) über das Mobilfunkendgerät mittels des von dem Mobilfunkendgerät unterstützten "Bearer Independent Protocol" (BIP-Protokoll) realisiert. Bei einer Kommunikation über das Hochgeschwindigkeitsprotokoll fungiert ein Mobilfunkendgerät jedoch lediglich als Weiterleitung für Datenpakete (z.B. als "IP-Router"), da die Mobilfunkkarte selbst über eine entwickelte Kommunikationsinfrastruktur verfügt, z.B. eine TCP/IP-Unterstützung. Die über das BIP-Protokoll von Seiten der Mobilfunkendgeräte zur Verfügung gestellten Mechanismen werden daher überflüssig und deshalb möglicherweise von zukünftigen Mobilfunkendgeräten nicht mehr unterstützt. Dies wiederum hat zur Folge, dass Applikationen, die auf einem Card Application Toolkit aufbauen, z.B. dem SIM Application Toolkit, mit zukünftigen das Hochgeschwindigkeitsprotokoll unterstützenden Mobilfunkendgeräten nicht mehr kompatibel und somit auch nicht mehr lauffähig sind.

Demzufolge ist es die Aufgabe der vorliegenden Erfindung, eine Möglichkeit bereitzustellen, eine Ausführung von CAT-Kommandos umfassenden Applikationen auf einer Mobilfunkkarte zu ermöglichen, die mit einem Mobilfunkendgerät über das Hochgeschwindigkeitsprotokoll kommuniziert.

Diese Aufgabe wird erfindungsgemäß durch ein Verfahren sowie eine Mobilfunkkarte mit den Merkmalen der unabhängigen Ansprüche gelöst. Die davon abhängigen Ansprüche beschreiben vorteilhafte Ausgestaltungen und Weiterbildungen der Erfindung.

Erfindungsgemäß wird eine CAT-Kommandos umfassende Applikation auf einer Mobilfunkkarte ausgeführt, indem ein auf der Mobilfunkkarte eingerichteter CAT-Emulator die CAT-Kommandos der auszuführenden Applikation in eine dem Hochgeschwindigkeitsprotokoll entsprechende Datenstruktur umsetzt und an das Mobilfunkendgerät zur dortigen Weiterverarbeitung überträgt. Dadurch wird bestehenden Applikationen, die CAT-Kommandos umfassen, auch auf solchen Mobilfunkkarten, die mit einem Mobilfunkendgerät gemäß dem Hochgeschwindigkeitsprotokoll kommunizieren, eine abwärtskompatible Ausführungsumgebung bereitgestellt, unter der CAT-Kommandos uneingeschränkt ausgeführt werden können.

Insbesondere kann zur Datenkommunikation zwischen der Mobilfunkkarte und dem Mobilfunkendgerät eine TCP/IP-Verbindung aufgebaut werden, so dass der CAT-Emulator die CAT-Kommandos der Applikation in eine Datenstruktur gemäß dem TCP/IP-Protokoll umsetzt, die über die TCP/IP-Verbindung von der Mobilfunkkarte an das Mobilfunkendgerät übertragen werden kann.

Das erfindungsgemäße Prinzip gilt insbesondere auch für die Untermenge der Kommandos, die auf dem Bearer Independent Protocol basieren (BIP-Kommandos), mit denen üblicherweise Daten zwischen einer Mobilfunkkarte, einem Mobilfunkendgerät und einem darüber erreichbaren Datennetzwerk über eine TCP- oder UDP-Verbindung ausgetauscht werden. Die BIP-Kommandos werden direkt auf dem CAT-Emulator der Mobilfunkkarte simuliert und in eine Datenstruktur umgesetzt, die über eine TCP/IP- oder UDP/IP-Verbindung an das Mobilfunkendgerät und von diesem direkt als IP-Pakete in ein Mobilfunk- oder ein anderes Netz weitergeleitet werden kann. Auf diese Weise können Applikationen, die BIP-Kommandos umfassen, auf Mobilfunkkarten unverändert ausgeführt werden, auch wenn diese das Hochgeschwindigkeitsprotokoll unterstützen und die entsprechenden Mobilfunkendgeräte deshalb das Bearer Independent Protocol nicht mehr unterstützen.

Ebenso werden solche CAT-Kommandos, die eine Kommunikation mit einem Benutzer über das Mobilfunkendgerät betreffen (z. B. über Kommandos, wie "DisplayText", "GetInput" oder dergleichen), von dem CAT-Emulator verarbeitet, indem sie in HTML-Seiten umgesetzt werden und an das Mobilfunkendgerät übertragen werden, um dort beispielsweise mittels eines Browsers auf einer Anzeigeeinrichtung des Mobilfunkendgerätes angezeigt zu werden.

Der erfindungsgemäße CAT-Emulator ist vorzugsweise als eine Laufzeitumgebung der auf der Mobilfunkkarte ausgeführten Applikationen ausgestaltet, beispielsweise als Java-Laufzeitumgebung oder C-Laufzeitumgebung. Im Falle einer Java-Laufzeitumgebung werden innerhalb dieser Laufzeitumgebung Applikationen als Java-Applets ausgeführt und verwendete CAT- oder SAT-Kommandos entsprechend der obigen Beschreibung interpretiert.

Bei der erfindungsgemäßen Mobilfunkkarte handelt es sich vorzugsweise um eine (U)SIM-Mobilfunkkarte, die das SIM-Application-Toolkit (SAT) verwendet.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig. 1: die Ausführung einer Applikation mit CAT-Kommandos auf einer erfindungsgemäßen Mobilfunkkarte mittels eines CAT-Emulators; und
- Fig. 2: einen Zugang einer auf einer Mobilfunkkarte ausgeführten Applikation zu einem Paketnetz mittels des Bearer Independent Protocol gemäß dem Stand der Technik.

Das Card Application Toolkit (CAT) basiert auf der im GSM-Mobilfunknetz bekannten Spezifikation des SIM Application Toolkit und erlaubt es dem Herausgeber einer Mobilfunkkarte, Mehrwertdienste unabhängig von dem betreffenden Mobilfunkendgerät in Form von auf der Mobilfunkkarte laufenden Applikationen bereitzustellen. Gleichwohl muss das betreffende Mobilfunkendgerät derartige Card-Application-Toolkit-Kommandos (CAT-Kommandos) jedoch unterstützen, damit es durch die entsprechende Applikation angesprochen werden kann. Im Bereich der GSM-Mobilfunknetze und bei (U)SIM-Mobilfunkkarten wird das SIM Application Toolkit eingesetzt, auf dessen Basis beispielsweise Banking-Anwendungen, Location-Based-Services oder Browser-Anwendungen implementiert werden können, die das jeweilige Mobilfunkendgerät einbeziehen.

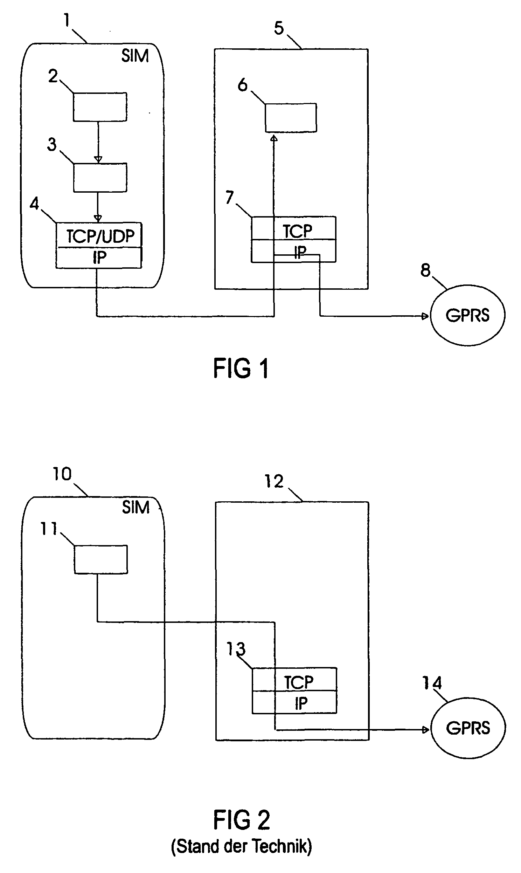

Die Figuren 1 und 2 illustrieren unterschiedliche Möglichkeiten, Applikationen 2,11, die CAT-Kommandos umfassen und bestimmte Funktionen des betreffenden Mobilfunkendgeräts 5,12 nutzen, auf der Mobilfunkkarte 1,10 auszuführen.

Bei der aus dem Stand der Technik bekannten Lösung der Figur 2 wird der eigentliche Zugang zu dem mobilen Paketnetz GPRS 14 über das von dem Mobilfunkendgerät 12 unterstützte Bearer Independent Protocol (BIP) bereitgestellt. Die Applikation 11 kommuniziert mit dem Mobilfunkendgerät 12 über APDUs (Application Protocol Data Units) gemäß ISO 7816, die auf dem Bearer Independent Protocol basierende BIP-Kommandos umfassen, mit denen Daten über eine TCP- oder UDP-Verbindung zwischen der Mobilfunkkarte 10 und dem Mobilfunkendgerät 12 oberhalb der TCP/UDP-Ebene ausgetauscht werden können. Die mit der APDU übertragenen Daten der Applikation 11 werden dann, falls gewünscht, über die TCP/IP-Kommunikationseinrichtung 13 des Mobilfunkendgeräts 12 in das GPRS-Paketnetz 14 weitergeleitet. Über diese Kommunikationsschnittstelle zwischen einer Applikation 11 und dem Mobilfunkendgerät 12 mittels APDUs mit BIP-Kommandos sind CAT-Kommandos oder SAT-Kommandos der Anwendung 11 unmittelbar ausführbar und werden von dem Mobilfunkendgerät 12 unterstützt.

Figur 1 illustriert demgegenüber eine Mobilfunkkarte 1 und ein Mobilfunkendgerät 5, die über eine Datenkommunikationsverbindung kommunizieren, die das moderne Hochgeschwindigkeitsprotokoll (HSP; High Speed Protocol) unterstützt. Dazu umfasst die Mobilfunkkarte 1 eine eigene TCP/IP- bzw. UDP/IP-Kommunikationseinrichtung 4, so dass auf der Mobilfunkkarte 1 ein eigener TCP/IP-Stack implementiert ist. Deshalb braucht das Mobilfunkendgerät 5 über seine eigene TCP/IP-Kommunikationseinrichtung 7 die von der Mobilfunkkarte 1 empfangenen IP-Pakete lediglich in das Mobilfunknetz 8 weiterzuleiten. Das BIP-Protokoll wird somit in der erfindungsgemäßen Anordnung gemäß Fig. 1 nicht mehr benötigt, da die Kommunikation zwischen der Mobilfunkkarte 1 und dem Mobilfunkendgerät 5 über eine dem Hochgeschwindigkeitsprotokoll entsprechenden Datenstruktur, d.h. im Falle einer TCP/IP-Verbindung auf "Paketebene" (Schicht 3 des OSI/ISO-Referenzmodells), abgewickelt werden kann. Vorzugsweise ist die Mobilfunkkarte 1 eine (U)SIM-Mobilfunkkarte, die als CAT-Kommandos die Kommandos des SIM Application Toolkits einsetzt.

Um dennoch CAT-Kommandos umfassende Applikationen 2 auf der Mobilfunkkarte 1 ausführen zu können, ist auf der Mobilfunkkarte 1 ein CAT-Emulator 3 eingerichtet, der beispielsweise als eigenständige Applikation oder auch als Systemprogramm oder Teil eines Betriebssystems der Mobilfunkkarte 1 ausgestaltet sein kann.

Beim Ausführen der Applikation 2, die beispielsweise ein Java-Applet sein kann, auf der Mobilfunkkarte 1, werden die CAT-Kommandos der Applikation 2 von dem CAT-Emulator 3 ausgeführt, indem sie in eine dem Hochgeschwindigkeitsprotokoll entsprechende Datenstruktur umgesetzt und an die Mobilfunkkarte 5 übertragen werden. Die TCP/IP-Kommunikationseinrichtung 4 der Mobilfunkkarte 1 baut zu diesem Zweck eine TCP/IP-Verbindung mit der TCP/IP-Kommunikationseinrichtung 7 des Mobilfunkendgeräts 5 auf, so das ein CAT-Kommando, das von dem CAT-Emulator 3 in eine über die TCP/IP-Verbindung übertragbare Datenstruktur umgesetzt wurde, zur Weiterbearbeitung und/oder Weiterleitung durch die Mobilfunkkarte 5 an diese übertragen werden kann. Der CAT-Emulator 3 repräsentiert somit eine abwärtskompatible Umgebung zur Ausführung von Applikationen 2, die CAT-Kommandos umfassen. Ohne den CAT-Emulator 3 wären derartige Applikationen 2 auf einer Mobilfunkkarte 1, die das Hochgeschwindigkeitsprotokoll unterstützt, nicht mehr ausführbar.

Eine Untermenge der CAT-Kommandos bilden die BIP-Kommandos, die auf dem Bearer Independent Protocol basieren. Dieses BIP-Protokoll ist ein Mechanismus, mit dessen Hilfe ein Mobilfunkendgerät einer Mobilfunkkarte einen Zugang zu den von dem Mobilfunkendgerät unterstützten Kommunikationskanälen bietet, beispielsweise dem mobilen Paketnetz GPRS, aber auch zu anderen Kommunikationskanälen, wie z. B. Bluetooth oder dergleichen.

Zur Ausführung der BIP-Kommandos, die von einem Mobilfunkendgerät 5, das mit der Mobilfunkkarte 10 über das Hochgeschwindigkeitsprotokoll kommunizieren kann, nicht notwendigerweise unterstützt werden, ist der CAT-Emulator 3 als BIP-Simulator eingerichtet, der Kommandos gemäß dem Bearer Independent Protocol interpretieren kann. Der CAT-Emulator 3 simuliert die in einer Applikation 2 auftretenden BIP-Kommandos und setzt sie in eine Datenstruktur um, die von der TCP/IP-Kommunikationseinrichtung 4 der Mobilfunkkarte 1 über eine TCP- oder UDP-Verbindung an das Mobilfunkendgerät 5 gesendet werden kann, beispielsweise in IP-Pakete. Die TCP/IP-Kommunikationseinrichtung 7 des Mobilfunkendgeräts 5 leitet die empfangenen Daten direkt als IP-Pakete in das Mobilfunknetz 8 weiter, sofern eine weitere Bearbeitung durch das Mobilfunkendgerät 5 nicht notwendig ist. Auf diese Weise können Applikationen, die BIP-Kommandos umfassen, auf der Mobilfunkkarte 1 unverändert ausgeführt werden, auch wenn diese das Hochgeschwindigkeitsprotokoll unterstützt und das entsprechenden Mobilfunkendgerät 5 deshalb das Bearer Independent Protocol nicht mehr unterstützt.

CAT-Kommandos, die eine Kommunikation mit einem Nutzer über das Mobilfunkendgerät 5 bezwecken, wie z. B. "DISPLAY TEXT", "GET INPUT" oder dergleichen, die also von dem Mobilfunkendgerät 5 nicht als IP-Pakete ins Mobilfunknetz 8 weitergeleitet werden können, setzt der CAT-Emulator 3 in ein Datenformat um, das von dem Mobilfunkendgerät 5 interpretiert und angezeigt werden kann, z.B. in HTML-Seiten. Die HTML-Seiten werden dann über die Kommunikationseinrichtungen 4 und 7 gemäß dem HTTP-Protokoll an das Mobilfunkendgerät 5 übertragen und dort von einem Browser 6 auf einem Display oder einer sonstigen Anzeigeeinrichtung dargestellt, zu der das Mobilfunkendgerät 5 Zugang hat.

In gleicher Weise können durch den CAT-Emulator 3 weitere Funktionalitäten und Mehrwertdienste bereitgestellt werden, die auf dem Card Application Toolkit oder dem SIM Application Toolkit basieren und durch die Verwendung des Hochgeschwindigkeitsprotokolls ermöglicht werden, beispielsweise "Location Based Services", SMS-Kurznachrichtenversand oder dergleichen. Voraussetzung ist zumindest teilweise, dass über das HSP äquivalente Dienste wie die bisherigen CAT-Kommandos (PROVIDE LOCAL INFORMATION, SEND SHORT MESSAGE, etc.) zur Verfügung stehen.

Der CAT-Emulator 3 bildet in der Mobilfunkkarte 1 eine Laufzeitumgebung zur Ausführung von Applikationen 2. Sofern es sich bei der Applikation 2 um ein Java-Applet handelt, ist der CAT-Emulator 3 eine Java-Laufzeitumgebung, die den Applikationen das heute bekannte API (Application Programming Interface), das CAT-, SAT- oder BIP- Kommandos auf die Ebene von Java-Prozeduraufrufen abbildet, zur Verfügung stellt. Selbstverständlich kann der CAT-Emulator 3 auch eine Laufzeitumgebung für andere Programmiersprachen bereitstellen, beispielsweise eine C-Laufzeitumgebung oder auch eine Ausführungsumgebung für native Sprachen.

Der CAT-Emulator 3 ist darüber hinaus in der Lage, auch solche CAT-Kommandos auszuführen, die auch durch eine Mobilfunkkarte 10 und ein Mobilfunkendgerät 12 gemäß Fig. 2 nicht unterstützt werden, da auch die Möglichkeit der Ausführung von CAT-Kommandos gemäß Fig. 2 nicht immer den vollen Funktionsumfang des Card Application Toolkits erfasst.

Der CAT-Emulator 3 kann somit beispielsweise Optionen von CAT-Kommandos ausführen, die von einem Mobilfunkendgerät 5 prinzipiell nicht unterstützt werden, für die aber Realisierungsmöglichkeiten auf Seiten des Hochgeschwindigkeitsprotokolls existieren. So können durch den CAT-Emulator 3 beispielsweise die Textattribute des CAT-Kommandos "DISPLAY TEXT" (fett, kursiv, farbig etc.) sowie Piktogramme (Icons) oder FRAMES genutzt werden, die nur von wenigen Mobilfunkendgeräten 5 unterstützt werden. Durch die Umsetzung der CAT-Kommandos in eine HTML-Seite für einen Browser 6 des Mobilfunkendgeräts 5 können derartige Optionen nunmehr durch den CAT-Emulator 3 interpretiert und schließlich von dem HTML-Browser 6 dargestellt werden.

Der CAT-Emulator 3 kann auch verwendet werden, um CAT-Kommandos wie die TIMER-Kommandos direkt auf der Karte auszuführen. Statt mit dem Kommando "TIMER MANAGEMENT" einen Timer im Mobilfunkendgerät zu starten, kann ein karteninterner Timer gestartet werden. Bei Ablauf des Timers wird über den CAT_Emulator die Applikation informiert. Bei Bedarf erlauben die Mechanismen des HSP den Start der Kommunikation mit dem Mobilfunkendgerät, ohne dass zunächst ein Kommando von diesem gesendet wurde.

## Patentansprüche

1. Verfahren zum Ausführen einer Card-Application-Toolkit- (CAT-) Kommandos umfassenden Applikation (2) auf einer Mobilfunkkarte (1), die eingerichtet ist, eine Datenkommunikation mit einem Mobilfunkendgerät (5) über ein Hochgeschwindigkeitsprotokoll zu führen, wobei die Mobilfunkkarte (1) eine eigene TCP/IP- bzw. UDP/IP-Kommunikationseinrichtung 4 aufweiset, **dadurch gekennzeichnet, dass** auf der Mobilfunkkarte (1) ein CAT-Emulator (3) eingerichtet ist, um die CAT-Kommandos umfassende Applikation (2) auf der Mobilfunkkarte (1) ausführen zu können, wobei beim Ausführen der Applikation (2) die CAT -Kommandos von dem CAT-Emulator (3) der Mobilfunkkarte (1) in dem Hochgeschwindigkeitsprotokoll entsprechende Datenstrukturen umgesetzt werden, die von der TCP/IP- bzw. UDP/IP-Kommunikationseinrichtung (4) an das Mobilfunkendgerät (5) übertragen werden.

2. Verfahren nach Anspruch 1, **dadurch gekennzeichnet, dass** zwischen der Mobilfunkkarte (1) und dem Mobilfunkendgerät (5) eine TCP/IP-Verbindung aufgebaut wird und die Card-Application-Toolkit-Kommandos in über die TCP/IP-Verbindung übertragbare Datenstrukturen umgesetzt und über die TCP/IP-Verbindung an das Mobilfunkendgerät (5) übertragen werden.

3. Verfahren nach Anspruch 1 oder 2, **dadurch gekennzeichnet, dass** solche Card-Application-Toolkit-Kommandos, die auf dem Bearer Independent Protocol basieren, von dem CAT-Emulator (3) simuliert werden, an das Mobilfunkendgerät (5) übertragen werden und von dem Mobilfunkendgerät (5) als IP-Pakete oder anders strukturierte Datenpakete in ein Mobilfunknetz (8) oder in ein anderes, über das Mobilfunkendgerät erreichbares Datennetz weitergeleitet werden.

4. Verfahren nach einem der Ansprüche 1 bis 3, **dadurch gekennzeichnet, dass** solche CAT-Kommandos, die eine Kommunikation mit einem Benutzer über das Mobilfunkendgerät (5) betreffen, von dem CAT-Emulator (3) in Seiten nach dem HTML-, WML-, XML- oder einem anderen für Browser geeigneten Standard umgesetzt und an das Mobilfunkendgerät (5) übertragen werden und auf einer Anzeigeeinrichtung des Mobilfunkendgeräts (5) mittels eines Browsers (6) angezeigt werden.

5. Verfahren nach einem der Ansprüche 1 bis 4, **dadurch gekennzeichnet, dass** solche CAT-Kommandos, die im Mobilfunkendgerät (5) verfügbare Zustandsinformationen (Zelleninformationen, Batterie-Ladestatus, etc.) betreffen, von dem CAT-Emulator (3) als IP-Pakete oder gemäß dem Hochgeschwindigkeitsprotokoll strukturierte Datenpakete an das Mobilfunkendgerät (5) übertragen werden und die Antworten von dem Mobilfunkendgerät (5) in das Format der CAT-Kommandos rückübersetzt werden.

6. Verfahren nach einem der Ansprüche 1 bis 5, **dadurch gekennzeichnet, dass** solche CAT-Kommandos, die Timer im Mobilfunkendgerät (5) betreffen, von dem CAT-Emulator (3) mit Hilfe eines karteninternen Timers emuliert werden, ohne dass dafür Daten zum Mobilfunkendgerät (5) gesendet werden.

7. Verfahren nach Anspruch 6, **dadurch gekennzeichnet, dass** die Mobilfunkkarte (1) nach Ablauf des karteninternen Timers eine Kommunikation mit dem Mobilfunkendgerät (5) veranlasst.

8. Verfahren nach einem der Ansprüche 1 bis 7, **dadurch gekennzeichnet, dass**, sofern die Applikation (2) SIM-Application-Toolkit-Kommados umfasst, der CAT-Emulator (3) die SIM-Application-Toolkit-Kommandos der Applikation (2) ausführt.

9. Verfahren nach einem der Ansprüche 1 bis 8, **dadurch gekennzeichnet, dass** der CAT-Emulator (3) eine Laufzeitumgebung für die Applikation (2) bereitstellt und die Applikation (2) darin ausführt.

10. Verfahren nach einem der vorhergehenden Ansprüche, **dadurch gekennzeichnet, dass** als Hochgeschwindigkeitsprotokoll ein USB-Protokoll oder ein Protokoll für Massenspeicherkarten, insbesondere ein MMC-Protokoll, verwendet wird.

11. Mobilfunkkarte (1), umfassend einen Prozessor zum Ausführen von Applikationen (2), einen Speicher mit zumindest einer Card-Application-Toolkit (CAT-)Kommandos umfassenden Applikation (2), einer Schnittstelle zur Datenkommunikation mit einem mit der Mobilfunkkarte (1) in Verbindung stehenden Mobilfunkendgerät (5) über ein Hochgeschwindigkeitsprotokoll, welche eine TCP/IP- bzw. UDP/IP-Kommunikationseinrichtung (4) umfasst, **gekennzeichnet durch** einen CAT-Emulator (3), der eingerichtet ist, beim Ausführen der Applikation (2) die CAT-Kommandos der Applikation (2) in eine dem Hochgeschwindigkeitsprotokoll entsprechende Datenstruktur umzusetzen und über die TCP/IP- bzw. UDP/IP-Kommunikationseinrichtung (4) der Schnittstelle an das Mobilfunkendgerät (5) zu übertragen, sofern die Mobilfunkkarte (2) mit dem Mobilfunkendgerät (5) verbunden ist.

12. Mobilfunkkarte (1) nach Anspruch 11, **gekennzeichnet durch** eine Kommunikationseinrichtung (4), die eingerichtet ist, über die Schnittstelle eine TCP/IP-Verbindung zu dem Mobilfunkendgerät (5) aufzubauen und die umgesetzten Card-Application-Toolkit-Kommandos über einen in dem Speicher angelegten TCP/IP-Stack an das Mobilfunkendgerät (5) zu übertragen, und der CAT-Emulator eingerichtet ist, die Card-Applikation-Toolkit-Kommandos in eine über die TCP/IP-Verbindung übertragbare Datenstruktur umzusetzen.

13. Mobilfunkkarte (1) nach Anspruch 11 oder 12, **dadurch gekennzeichnet, dass** der CAT-Emulator (3) eingerichtet ist, solche Card-Application-Toolkit-Kommandos, die auf dem Bearer Independent Protocol basieren, zu simulieren und über die Schnittstelle an das Mobilfunkendgerät (5) zur Weiterleitung als IP-Pakete in ein Mobilfunknetz (8) zu übertragen.

14. Mobilfunkkarte (1) nach einem der Ansprüche 11 bis 13, **dadurch gekennzeichnet, dass** der CAT-Emulator (3) eingerichtet ist, solche Card-Application-Toolkit-Kommandos, die eine Kommunikation mit einem Benutzer über das Mobilfunkendgerät (5) betreffen, in HTML-Seiten umzusetzen und über die Schnittstelle an das Mobilfunkendgerät (5) zum Anzeigen auf einer Anzeigeeinrichtung des Mobilfunkendgeräts (5) mittels eines Browsers (6) zu übertragen.

15. Mobilfunkkarte (1) nach einem der Ansprüche 11 bis 14, **dadurch gekennzeichnet, dass** der CAT-Emulator (3) eingerichtet ist, SIM-Application-Toolkit-Kommandos der Applikation (2) auszuführen.

16. Mobilfunkkarte (1) nach einem der Ansprüche 11 bis 15, **dadurch gekennzeichnet, dass** der CAT-Emulator (3) eine Laufzeitumgebung zur Ausführung der Applikation (2) ist.

17. Mobilfunkkarte (1) nach Anspruch 16, **dadurch gekennzeichnet, dass** der CAT-Emulator (3) eine Java-Laufzeitumgebung für Java-Applets ist.

18. Mobilfunkkarte (1) nach einem der Ansprüche 11 bis 17, **dadurch gekennzeichnet, dass** die Mobilfunkkarte (1) eine (U)SIM-Mobilfunkkarte ist.

## Claims

1. A method for executing an application (2) comprising card application toolkit (CAT) commands on a mobile communication card (1) which is adapted to conduct a data communication with a mobile communication terminal (5) via a high-speed protocol, wherein the mobile communication card (1) has a TCP/IP and/or UDP/IP communication device (4) of its own, **characterized in that** on the mobile communication card (1) a CAT emulator (3) is implemented in order to be able to execute the application (2) comprising CAT commands on the mobile communication card (1), wherein, when the application (2) is executed, the CAT commands are converted by the CAT emulator (3) of the mobile communication card (1) to data structures corresponding to the high-speed protocol, which are transmitted to the mobile communication terminal (5) by the TCP/IP and/or UDP/IP communication device (4).

2. The method according to claim 1, **characterized in that** between the mobile communication card (1) and the mobile communication terminal (5), a TCP/IP connection is established and the card application toolkit commands are converted to data structures transmittable via the TCP/IP connection and are transmitted to the mobile communication terminal (5) via the TCP/IP connection.

3. The method according to claim 1 or 2, **characterized in that** such card application toolkit commands which are based on the bearer independent protocol are simulated by the CAT emulator (3), transmitted to the mobile communication terminal (5) and routed by the mobile communication terminal (5) as IP packets or differently structured data packets to a mobile communication network (8) or other data network accessible via the mobile communication terminal.

4. The method according to any of the claims 1 to 3, **characterized in that** such CAT commands which relate to a communication with a user via the mobile communication terminal (5) are converted by the CAT emulator (3) to pages according to the HTML, WML, XML or other standard suitable for browsers and are transmitted to the mobile communication terminal (5) and are displayed on a display device of the mobile communication terminal (5) by means of a browser (6).

5. The method according to any of the claims 1 to 4, **characterized in that** such CAT commands which relate to state information (cell information, battery charging status, etc.) available in the mobile communication terminal (5) are transmitted by the CAT emulator (3) as IP packets or data packets structured in accordance with the high-speed protocol to the mobile communication terminal (5) and the responses are retranslated by the mobile communication terminal (5) to the format of the CAT commands.

6. The method according to any of the claims 1 to 5, **characterized in that** such CAT commands which relate to timers in the mobile communication terminal (5) are emulated by the CAT emulator (3) with the aid of a card-internal timer, without sending data to the mobile communication terminal (5) for this purpose.

7. The method according to claim 6, **characterized in that** the mobile communication card (1) initiates a communication with the mobile communication terminal (5) after the expiration of the card-internal timer.

8. The method according to any of the claims 1 to 7, **characterized in that,** if the application (2) comprises SIM application toolkit commands, the CAT emulator (3) executes the SIM application toolkit commands of the application (2).

9. The method according any of the claims 1 to 8, **characterized in that** the CAT emulator (3) makes available a runtime environment for the application (2) and executes the application (2) therein.

10. The method according to any of the preceding claims, **characterized in that** a USB protocol or a protocol for mass memory cards, in particular an MMC protocol, is used as the high-speed protocol.

11. A mobile communication card (1) comprising a processor for executing applications (2), a memory with at least one application (2) comprising card application toolkit (CAT) commands, an interface for data communication with a mobile communication terminal (5) connected to the mobile communication card (1) via a high-speed protocol, comprising a TCP/IP and/or UDP/IP communication device (4), **characterized by** a CAT emulator (3) that is adapted, upon execution of the application (2), to convert the CAT commands of the application (2) to a data structure corresponding to the high-speed protocol, and transmit them to the mobile communication terminal (5) via the TCP/IP and/or UDP/IP communication device (4) of the interface, if the mobile communication card (2) is connected to the mobile communication terminal (5).

12. The mobile communication card (1) according to claim 11, **characterized by** a communication device (4) which is adapted to establish a TCP/IP connection to the mobile communication terminal (5) via the interface and to transmit the converted card application toolkit commands to the mobile communication terminal (5) via a TCP/IP stack set up in the memory, and the CAT emulator is adapted to convert the card application toolkit commands to a data structure transmittable via the TCP/IP connection.

13. The mobile communication card (1) according to claim 11 or 12, **characterized in that** the CAT emulator (3) is adapted to simulate such card application toolkit commands that are based on the bearer independent protocol, and transmit them to the mobile communication terminal (5) via the interface for routing to a mobile communication network (8) as IP packets.

14. The mobile communication card (1) according to any of the claims 11 to 13, **characterized in that** the CAT emulator (3) is adapted to convert such card application toolkit commands that relate to a communication with a user via the mobile communication terminal (5) to HTML pages and transmit them to the mobile communication terminal (5) via the interface for displaying on a display means of the mobile communication terminal (5) by means of a browser (6).

15. The mobile communication card (1) according to any of the claims 11 to 14, **characterized in that** the CAT emulator (3) is adapted to execute SIM application toolkit commands of the application (2).

16. The mobile communication card (1) according to any of the claims 11 to 15, **characterized in that** the CAT emulator (3) is a runtime environment for executing the application (2).

17. The mobile communication card (1) according to claim 16, **characterized in that** the CAT emulator (3) is a Java runtime environment for Java applets.

18. The mobile communication card (1) according to any of the claims 11 to 17, **characterized in that** the mobile communication card (1) is a (U)SIM mobile communication card.

## Revendications

1. Procédé d'exécution d'une application (2) comprenant des commandes de Card-Application-Toolkit (CAT) sur une carte de téléphonie mobile (1) équipée pour mener une communication de données avec un terminal de radiocommunication mobile (5) par l'intermédiaire d'un protocole à haute vitesse, la carte de téléphonie mobile (1) comportant un propre équipement de communication TCP / IP ou UDP / IP (4), **caractérisé en ce que**, sur la carte de téléphonie mobile (1), un émulateur CAT (3) est équipé pour pouvoir exécuter sur la carte de téléphonie mobile (1) l'application (2) comprenant les commandes CAT, cependant que, lors de l'exécution de l'application (2), les commandes CAT sont converties par l'émulateur CAT (3) de la carte de téléphonie mobile (1) en des structures de données qui correspondent au protocole à haute vitesse et sont transmises par l'équipement de communication TCP / IP ou UDP / IP (4) au terminal de radiocommunication mobile (5).

2. Procédé selon la revendication 1, **caractérisé en ce que**, entre la carte de téléphonie mobile (1) et le terminal de radiocommunication mobile (5), une liaison TCP / IP est établie, et **en ce que** les commandes de Card-Application-Toolkit sont converties en des structures de données transmissibles par l'intermédiaire de la liaison TCP / IP et sont transmises au terminal de radiocommunication mobile (5) par l'intermédiaire de la liaison TCP / IP.

3. Procédé selon la revendication 1 ou 2, **caractérisé en ce que** les commandes de Card-Application-Toolkit qui sont basées sur le protocole Bearer Independent sont simulées par l'émulateur CAT (3), transmises au terminal de radiocommunication mobile (5) et transférées par le terminal de radiocommunication mobile (5), en tant que paquets IP ou paquets de données structurés autrement, dans un réseau de téléphonie mobile (8) ou dans un autre réseau de données accessible par l'intermédiaire du terminal de radiocommunication mobile.

4. Procédé selon une des revendications de 1 à 3, **caractérisé en ce que** les commandes CAT qui concernent une communication avec un utilisateur par l'intermédiaire du terminal de radiocommunication mobile (5) sont converties par l'émulateur CAT (3) en pages conformément au standard HTLM, WML, XML ou à un autre standard approprié pour navigateur, transmises au terminal de radiocommunication mobile (5) et affichées sur un équipement d'affichage du terminal de radiocommunication mobile (5) au moyen d'un navigateur (6).

5. Procédé selon une des revendications de 1 à 4, **caractérisé en ce que** les commandes CAT qui concernent des informations d'état (informations de ligne, état de charge de la batterie, etc.) disponibles dans le terminal de radiocommunication mobile (5) sont transmises par l'émulateur CAT (3) au terminal de radiocommunication mobile (5) en tant que paquets IP ou paquets de données structurés conformément au protocole à haute vitesse, et **en ce que** les réponses sont retraduites par le terminal de radiocommunication mobile (5) dans le format des commandes CAT.

6. Procédé selon une des revendications de 1 à 5, **caractérisé en ce que** les commandes CAT qui concernent des minuteries dans le terminal de radiocommunication mobile (5) sont émulées par l'émulateur CAT (3) à l'aide d'une minuterie interne à la carte, sans que des données soient envoyées pour cela au terminal de radiocommunication mobile (5).

7. Procédé selon la revendication 6, **caractérisé en ce que** la carte de téléphonie mobile (1), après écoulement du temps de la minuterie interne à la carte, déclenche une communication avec le terminal de radiocommunication mobile (5).

8. Procédé selon une des revendications de 1 à 7, **caractérisé en ce que**, dans la mesure où l'application (2) comprend des commandes de SIM-Application-Toolkit, l'émulateur CAT (3) exécute les commandes de SIM-Application-Toolkit de l'application (2).

9. Procédé selon une des revendications de 1 à 8, **caractérisé en ce que** l'émulateur CAT (3) met à disposition un environnement d'exécution pour l'application (2) et y exécute l'application (2).

10. Procédé selon une des revendications précédentes, **caractérisé en ce que**, en tant que protocole à haute vitesse, c'est un protocole USB ou un protocole pour cartes mémoire de masse, en particulier un protocole MMC, qui est utilisé.

11. Carte de téléphonie mobile (1), comprenant un processeur destiné à l'exécution d'applications (2), une mémoire comportant au moins une application (2) comprenant des commandes de Card-Application-Toolkit (CAT), une interface destinée à la communication de données, par l'intermédiaire d'un protocole à haute vitesse, avec un terminal de radiocommunication mobile (5) se trouvant en liaison avec la carte de téléphonie mobile (1) qui comprend un équipement de communication TCP / IP ou UDP / IP (4), **caractérisée par** un émulateur CAT (3) qui est équipé pour, lors de l'exécution de l'application (2), convertir les commandes CAT de l'application (2) en une structure de données correspondant au protocole à haute vitesse et les transmettre au terminal de radiocommunication mobile (5) par l'intermédiaire de l'équipement de communication TCP / IP ou UDP / IP (4) de l'interface, dans la mesure où la carte de téléphonie mobile (2) est reliée au terminal de radiocommunication mobile (5).

12. Carte de téléphonie mobile (1) selon la revendication 11, **caractérisée par** un équipement de communication (4) équipé pour établir par l'intermédiaire de l'interface une liaison TCP / IP avec le terminal de radiocommunication mobile (5) et pour transmettre au terminal de radiocommunication mobile (5), par l'intermédiaire d'une pile TCP/IP placée dans la mémoire, les commandes de Card-Application-Toolkit converties, et l'émulateur CAT étant équipé pour convertir les commandes de Card-Application-Toolkit en une structure de données transmissible par l'intermédiaire de la liaison TCP / IP.

13. Carte de téléphonie mobile (1) selon la revendication 11 ou 12, **caractérisée en ce que** l'émulateur CAT (3) est équipé pour simuler les commandes de Card-Application-Toolkit qui sont basées sur le protocole Bearer Independent et pour les transmettre par l'intermédiaire de l'interface au terminal de radiocommunication mobile (5) afin qu'elles y soient transmises en tant que paquets IP dans un réseau de téléphonie mobile (8).

14. Carte de téléphonie mobile (1) selon une des revendications de 11 à 13, **caractérisée en ce que** l'émulateur CAT (3) est équipé pour convertir en pages HTLM les commandes de Card-Application-Toolkit qui concernent une communication avec un utilisateur par l'intermédiaire du terminal de radiocommunication mobile (5) et pour les transmettre, par l'intermédiaire de l'interface, au terminal de radiocommunication mobile (5) afin qu'elles y soient affichées sur un équipement d'affichage du terminal de radiocommunication mobile (5) au moyen d'un navigateur (6).

15. Carte de téléphonie mobile (1) selon une des revendications de 11 à 14, **caractérisée en ce que** l'émulateur CAT (3) est équipé pour exécuter des commandes de SIM-Application-Toolkit de l'application (2).

16. Carte de téléphonie mobile (1) selon une des revendications de 11 à 15, **caractérisée en ce que** l'émulateur CAT (3) est un environnement d'exécution pour l'exécution de l'application (2).

17. Carte de téléphonie mobile (1) selon la revendications 16, **caractérisée en ce que** l'émulateur CAT (3) est un environnement d'exécution Java pour applets Java.

18. Carte de téléphonie mobile (1) selon une des revendications de 11 à 17, **caractérisée en ce que** la carte de téléphonie mobile (1) est une carte de téléphonie mobile (U)SIM.
